# EUROPEAN PATENT APPLICATION

(11) **EP 4 778 399 A1**
(43) Date of publication of application: **22.07.2026**
(21) Application number: 25224276.3
(22) Date of filing: 17.12.2025
(51) Int. Cl.: A23G 3/34, A23P 30/25, B29C 48/00, B29C 48/30

(54) **MACHINE FOR PRODUCING A FILLED FOOD PRODUCT**

(30) Priority: 16.01.2025 IT 202500000684
(71) Applicant: Selmi S.r.l., 12042 BRA (CN) (IT)
(72) Inventor: SELMI, Mr. Paolo, I-12042 Bra (Cuneo) (IT)
(74) Representative: Buzzi, Notaro & Antonielli d'Oulx S.p.A.

(57) **Abstract**

A machine (10) for producing a filled food product is described, comprising:
- a first feeding device (20) for feeding a first food material along a first feeding direction (K1);
- a second feeding device (40) for feeding a second food material along a second feeding direction (K2) transverse to said first feeding direction (K1);
- an extrusion unit (60) comprising at least a first outlet (62), placed in fluid communication with the first feeding device (20), and at least a second outlet (64), placed in fluid communication with the second feeding device (40).

The machine is capable of producing filled food products comprising, each, an external housing constituted by an extrudable dough or paste, and a filling contained in said housing.

## Description

### Field of the invention

The present invention relates to a machine for producing a filled food product.

In particular, the present invention relates to a machine capable of producing filled food products comprising, each, an external housing constituted by an extrudable dough or paste (for example marzipan, almond paste, hazelnut paste, peanut paste, date paste, orange paste and other types of dried fruit paste), and a filling contained in said housing, which can also be an extrudable paste or a cream (for example a soft spreadable cream based on chocolate, hazelnuts, pistachios, almonds, etc., or a cremino, a gianduia paste, a confectionery filling, jams, caramel, etc.).

The products that can be made with the machine described herein can be snacks in the form of sweet or savory bars, as well as energy bars to be consumed before, during or after sports activities.

In general, the present invention relates to a machine according to claim 1.

The claims form an integral part of the teaching provided herein.

Further characteristics and advantages of the present invention will be apparent from the following description with reference to the appended drawings, provided by way of non-limiting example only, wherein:
- figure 1 represents a perspective view of a preferred embodiment of the machine described herein;
- figure 2 represents a side view, partially in section, of the machine of figure 1;
- figure 2A represents an enlargement of a detail of figure 2;

- figure 3 represents a side view, partially in section, of a detail of an alternative embodiment of the machine described herein;
- figure 4A illustrates continuous strands of food material exiting from an extrusion unit of the machine of figure 1; and
- figure 4B illustrates continuous strands of food material exiting from an extrusion unit of the machine of figure 3.

In the following description, various specific details are illustrated aimed at an in-depth understanding of the embodiments. The embodiments can be made without one or more of the specific details, or with other methods, components or materials etc. In other instances, known structures, materials or operations are not shown or described in detail to avoid obscuring various aspects of the embodiment.

The references used herein are for convenience only and therefore do not define the scope of protection or the scope of the embodiments.

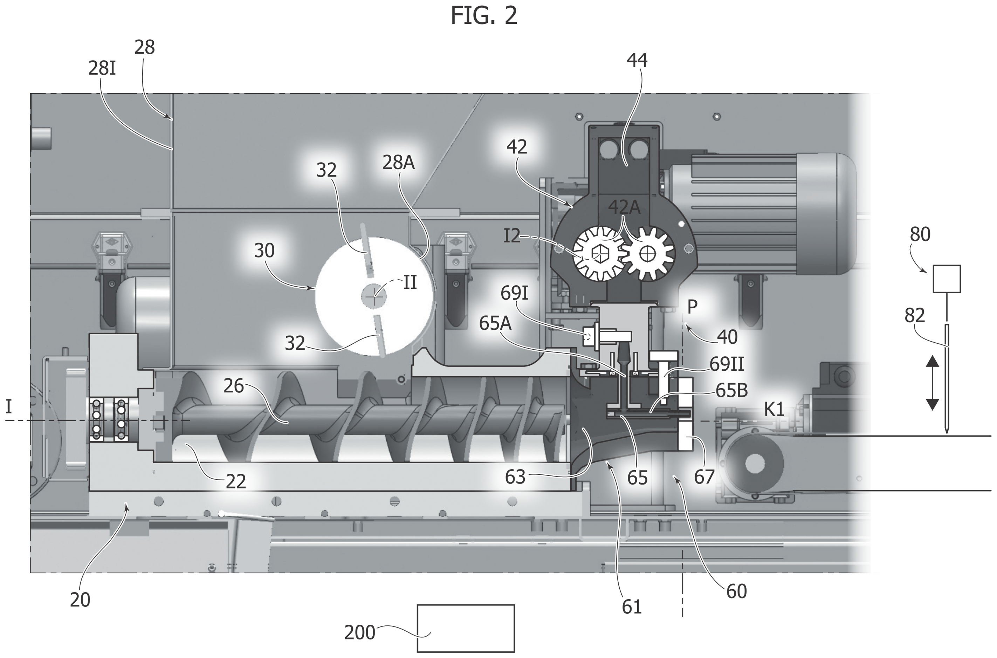

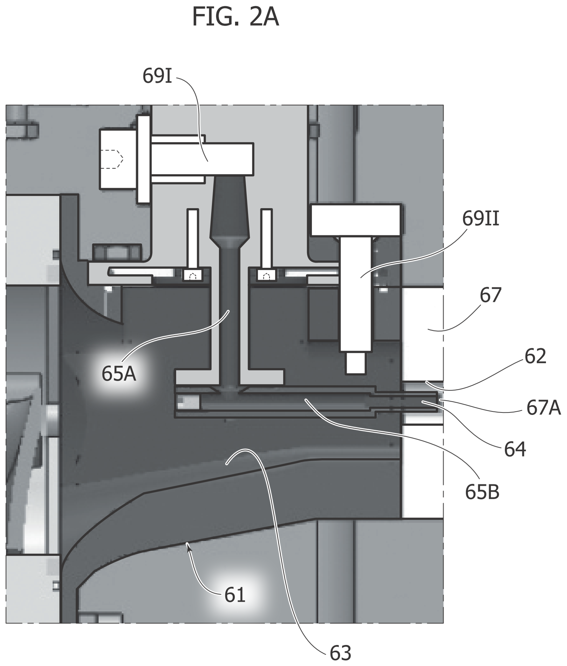

In general, the machine described herein - collectively indicated by reference number 10 - comprises (see figures 2, 4A, 4B, 5A and 5B):
- a first feeding device 20 for feeding a first food material along a first feeding direction K1;
- a second feeding device 40 for feeding a second food material along a second feeding direction K2 transverse to the first feeding direction K1;
- an extrusion unit 60 comprising at least a first outlet 62, placed in fluid communication with the first feeding device 20, and at least a second outlet 64, placed in fluid communication with the second feeding device 40, wherein the first outlet 62 and the second outlet 64 lie on a same plane transverse to the first feeding direction K1, and are mutually arranged so as to determine a continuous flow 102 of the first material and a continuous flow 104 of the second material, which advance along the first feeding direction K1 and are such that the continuous flow of the first material at least partially surrounds the continuous flow of the second material so as to contain it;
- a cutting unit 80 comprising a knife 82 movable on a plane transverse to the first feeding direction K1, for portioning the continuous flow of the first material and the continuous flow of the second material, into a plurality of filled products 120, each comprising an external housing 120A constituted by the first material, and a filling 120B constituted by the second material and contained in the housing 120A.

In one or more preferred embodiments, the first feeding direction K1 is horizontal, while the second feeding direction K2 is vertical.

As anticipated above, the first food material can be any extrudable type of food dough or paste.

The second food material can be an extrudable food paste or a cream.

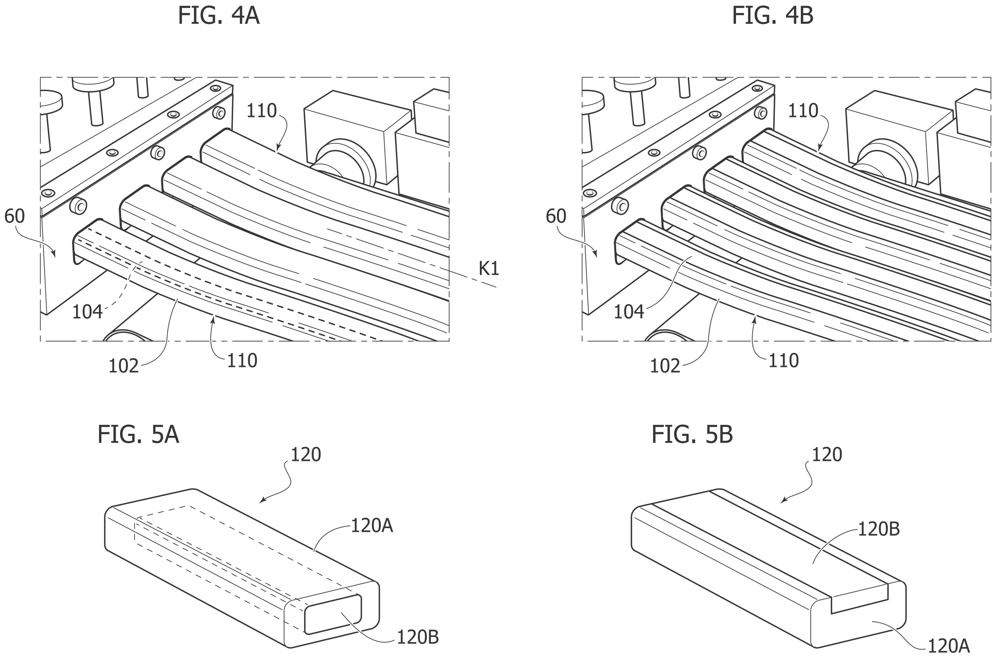

In view of the above, the machine described herein is capable of extruding simultaneously - see figures 4A and 4B - the continuous flow 102 of the first material and the continuous flow 104 of the second material according to a mutual arrangement wherein the continuous flow 102 of the first material surrounds the continuous flow 104 of the second material and contains it.

The two material flows 102, 104 advance along the feeding direction K1 and, starting from the two outlets 62, 64, extend along said direction, without interruption, constituting a continuous strand 110 of material, which reaches the cutting unit 80.

The machine 10 is therefore configured to feed said continuous strand of material 110, formed by the two mutually coupled material flows 102, 104, in a continuous and constant manner towards the cutting unit 80; the latter operates to subdivide the continuous strand of material 110 into a plurality of distinct filled products 120.

It can, therefore, be understood how the machine described herein is capable of producing, through a simple and reliable process, filled food products of various compositions, guaranteeing high production volumes and optimal and constant production quality.

Figures 5A and 5B illustrate two different types of filled product that can be made using the machine described herein.

In one or more preferred embodiments, as the one illustrated, the first feeding device 20 comprises an internal chamber 22, in which the first material is received, and at least one screw feeding tool 26, which is rotatable about a rotation axis I parallel to the first feeding direction K1.

The internal chamber 22 and the screw feeding tool 26 are configured to advance the first material along the feeding direction K1 as a result of a rotation of the same tool about the rotation axis I.

In the illustrated example, the feeding device 20 comprises, in particular, two screw feeding tools 26 disposed mutually side-by-side and with their respective rotation axes I parallel to each other. As will be better understood in the following, the number of tools can vary according to the needs of specific applications, and in particular according to the number of material strands 110, parallel to each other, that are produced simultaneously by the machine 10.

In one or more preferred embodiments, as the one illustrated, the feeding device 20 further comprises a hopper 28, which is configured to receive therein a certain quantity of the first material, preferably at least a quantity sufficient to produce a given batch of filled products, and which is disposed above the internal chamber 22 and in fluid communication with it, so that the first material contained in the hopper 28 moves by gravity inside the internal chamber 22, as space is created therein to receive new material.

In one or more preferred embodiments, as the one illustrated, the hopper 28 comprises a tank 28I for receiving the first material, inside which, at its lower region, a roller 30 is disposed, rotatable about a rotation axis II, transverse to the rotation axis I.

The rotatable roller 30 has the function of favoring the descent of the first material inside the chamber 22.

In one or more preferred embodiments, as the one illustrated, the roller 30 is placed close to a portion 28A of a lateral wall of the tank 28 that partially reproduces the cylindrical shape of the roller 30, and with which the external wall of the roller 30 is in a near-contact condition.

The roller 30 comprises one or more radial blades 32, which perform the function of engaging the first material and pushing it towards the chamber 22 located below, as a result of the rotation of the roller 30 about the rotation axis II.

The radial blades 32 can be retracted inside the roller 30, against the action of elastic means provided inside the same roller, so that, at the cylindrical portion 28A of the tank 28, said same portion pushes the blades 32 into their respective retracted position.

The direction of rotation of the roller 30 is such that the blades 32 perform an upward movement when they pass in front of the cylindrical portion 28A of the tank 28.

It follows that the blades 32 cannot act on the first material during the upward movement that they perform with each revolution of the roller 30, while they can perform an effective downward pushing action on the first material, when they perform the opposite downward movement.

In one or more preferred embodiments, as the one illustrated, the second feeding device 40 comprises a volumetric pump 42 comprising at least one rotating pumping member and configured to feed the second material to the second outlet 64 at a predetermined pressure.

In one or more preferred embodiments, as the one illustrated, the volumetric pump 42 is of the internal gear type.

In one or more preferred embodiments, as the one illustrated, the volumetric pump 42 comprises an upper manifold 44, which defines the suction side of the pump and is connected to a conduit (not illustrated) configured to feed the second material to the pump itself.

In some applications, the conduit in question can connect the pump 42 directly to a machine for the preparation and/or treatment of the second material, so that the second material can be immediately used in the process of the machine described herein, without the need to provide intermediate storage phases.

In one or more preferred embodiments, as the one illustrated, the pump 42 comprises an internal gear constituted by two toothed wheels 42A in mutual engagement, which are rotatable about respective rotation axes I2 parallel to each other and orthogonal to the feeding direction K2.

In one or more preferred embodiments, as the one illustrated, the extrusion unit 60 comprises a conduit structure 61 configured to place the internal chamber 22 of the first feeding device 20 in fluid communication with the first outlet 62, and the delivery side of the volumetric pump 42 in fluid communication with the second outlet 64.

In one or more preferred embodiments, as the one illustrated (see figures 2 and 2A), the structure 61 comprises a conduit 63, which extends along the feeding direction K1 and presents a flow section of decreasing width in the direction towards the first outlet 62.

In one or more preferred embodiments, as the one illustrated (see figures 2 and 2A), the structure 61 further comprises a second conduit 65, which is disposed at least partially inside the conduit 63 and is characterized by a generic L-shaped conformation, presenting a first section 65A extending along the feeding direction K2, and a second section 65B orthogonal to it, extending along the feeding direction K1 (and substantially coaxial with the first conduit 63).

The conduit 65 is configured to place the delivery side of the volumetric pump 42 in fluid communication with the second outlet 64.

As anticipated above, the two outlets 62 and 64 lie on a same plane P orthogonal to the feeding direction K1 and are configured to form the continuous flow 102 of the first material and the continuous flow 104 of the second material according to a configuration of mutual coupling.

In particular, the two material flows 102, 104 advance together along the first feeding direction K1 and are such that the continuous flow 102 of the first material at least partially surrounds the continuous flow 104 of the second material so as to contain it.

Incidentally, it is noted that with the term "contain" it is generally meant that the flow of the first material defines internally a cavity (closed or open laterally, i.e., in a plane of section transverse to the feeding direction K1) that houses the flow of the second material.

In one or more preferred embodiments, as the one illustrated, the extrusion unit 60 comprises a plate 67, which is fixed to the structure 61 at the downstream end of the conduit 63, and presents at least one opening 67A placed in fluid communication with the conduit 63. Furthermore, the section 65B of the second conduit 65 extends until it inserts itself inside the opening 67A, where it terminates.

According to this construction mode of the extrusion unit 60, the first outlet 62 is thus constituted by the passage obtained between the internal wall of the opening 67A and the external wall of the end of the section 65B of the second conduit 65; the second outlet 64 is instead defined precisely by the end of the section 65B of the second conduit 65.

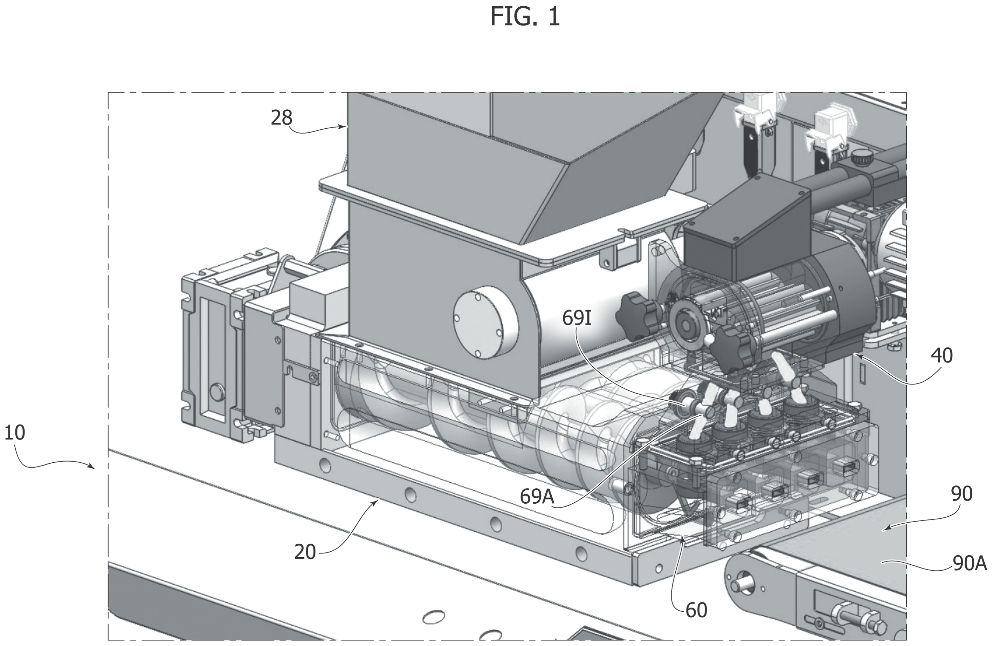

The second outlet 64 can be completely surrounded by the first outlet 62 (as in the example of figures 1 and 2) in such a way that the continuous flow 104 of the second material is completely surrounded by the continuous flow 102 of the first material.

The flow sections of the two outlets 62 and 64 can have various shapes, for example rectangular, circular, triangular, etc..

In one or more preferred embodiments, as the one illustrated (in particular, see figure 4A), the extrusion unit 60 comprises a plurality of pairs of outlets 62, 64, so as to form a plurality of material strands 110 that advance and extend parallel along the feeding direction K1.

The number of such pairs can vary according to the needs of specific applications.

Clearly, the conduit structure 61 described above will be configured to feed the two materials to each of the provided pairs of outlets 62, 64.

Figure 4A illustrates the material strands 110 exiting from the extrusion unit 60 according to this embodiment; figure 5A illustrates the corresponding filled product 120 obtained following the cutting performed by the cutting unit 80.

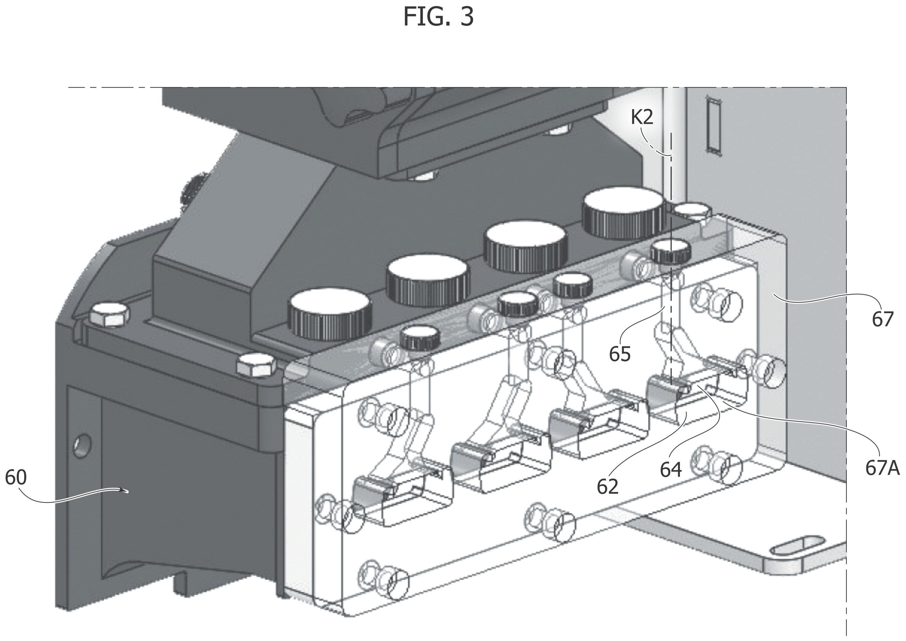

In one or more alternative embodiments, as the one illustrated (see figure 3), the outlet 62 and the outlet 64 are instead configured so that the first outlet surrounds the second only partially.

Correspondingly, the continuous flow 102 of the first material only partially surrounds the continuous flow 104 of the second material.

In particular, according to this embodiment, the continuous flow 102 of the first material has a shape such as to define a cavity for housing the second material, which is not completely closed inside the first material (with reference to a section transverse to the feeding direction K1), as in the embodiment of figures 1 and 2, but opens towards the outside (in a direction transverse to the feeding direction K1), so as to expose the second material contained therein.

With specific reference to figure 3, this illustrates the detail of a preferred embodiment of the extrusion unit 60 for realizing such a variant of the configuration of the two material flows 102, 104.

With reference to said figure, it can be noted that the second conduit 65 has a different path compared to the example of figure 2, and in particular is configured to feed the second material to the second outlet 64 not along the feeding direction K1, but, on the contrary, along a feeding direction K2' orthogonal to the feeding direction K1 and parallel to the feeding direction K2.

In one or more preferred embodiments, as the one illustrated, the second conduit 65 is formed at least partially in the plate 67 and opens onto the opening 67A of the plate 67.

Therefore, through the conduit 65, the flow of the second material is directed against the flow of the first material, along the feeding direction K2', and, only following contact with the flow 102 of the first material, is then redirected along the feeding direction K1.

In this intersection region, the opening 67A assumes a configuration such as to simultaneously define the two outlets 62, 64.

Figure 4B illustrates the material strands 110 exiting from the extrusion unit 60 according to this further embodiment; figure 5B illustrates the corresponding filled product 120 obtained following the cutting performed by the cutting unit 80.

Preferably, the extrusion unit 60 can have a modular structure provided with interchangeable components, so as to be configurable in one or the other of the two embodiments of figures 2 and 3.

In one or more preferred embodiments, as the one illustrated, the machine 10 comprises a control unit 200 configured to control the two feeding devices 20, 40 so that the operation described above is performed.

Preferably, the control unit 200 is configured to control the feeding device 20 based on a reference value indicative of a rotation speed of the screw feeding tool 26, and is configured to control the second feeding device 40 based on a reference value indicative of a rotation speed of the rotating member of the volumetric pump 42.

The person skilled in the art will understand, therefore, that it is possible to guarantee correct operation of the machine 10 through the simple control of the rotation speeds of the operating members of the two feeding devices 20, 40.

Preferably, the control unit 200 comprises a memory module in which one or more combinations of machine parameters (for example, the reference values indicated above) can be stored; the operator can therefore save on the memory unit the optimal machine parameter combinations for the different products he intends to produce, so that uniform, quality, and efficient production is always guaranteed.

In one or more preferred embodiments, as the one illustrated (see in particular figure 2A), the extrusion unit 60 comprises a closure member 69I, which is mounted on the extrusion unit 60 so as to be disposed inside the conduit 65 and is adjustable in position so as to vary the flow section of the conduit at the region occupied by the same closure member.

Through the closure member 691 it is therefore possible to adjust the flow rate of the flow of the second material that is fed to the second outlet 64.

Preferably, the closure member 691 is constituted by a threaded pin, which extends transversely to the conduit 65, crossing it, and engaging a threaded hole made in the structure 61 of the extrusion unit 60; the threaded pin 691 comprises, in an intermediate region thereof, a through opening 69A (Figure 1) configured to place in mutual flow communication a region of the conduit 65 located upstream of the pin and a region of the conduit 65 located downstream.

Through a rotation of the threaded pin 691 about its own axis, it is possible to vary its position along the threaded hole that houses it, and consequently vary the useful section of the opening 69A that places in communication the two regions of the conduit 65 upstream and downstream of the threaded pin 691.

The adjustment of the pin 691 can be performed manually, and in this case, the pin 69I can comprise, at one end thereof, a knob or a seat predisposed for engagement by a tool, to facilitate the adjustment operations.

Alternatively, the adjustment of the pin 691 can occur via a dedicated actuator, for example through control by the same control unit 200.

Preferably, a closure member 691 as described above is associated with each conduit 65 of the extrusion unit 60 that brings the second material to a respective outlet 64.

Furthermore, in one or more preferred embodiments, as the one illustrated (see figure 2A), the extrusion unit 60 comprises a further closure member 69II, which is mounted on the extrusion unit 60, this time so as to be disposed inside the conduit 63, and is adjustable in position so as to vary the flow section of the conduit 63 at the region occupied by the same closure member.

Analogously to the closure member 69I, the closure member 69II allows adjusting the flow rate of the flow of the first material that is fed to the first outlet 62.

Preferably, the closure member 69II is constituted by a threaded pin, which extends transversely to the conduit 61 and whose axial position can be varied to vary the internal space of the conduit 63 occupied by the same pin.

Also in this case, the adjustment of the pin 69II can be performed manually, and in this case, the pin 6911 can comprise, at one end thereof, a knob or a seat predisposed for engagement by a tool, to facilitate the adjustment operations.

Alternatively, the adjustment of the pin 69II can occur via a dedicated actuator, for example through control by the same control unit 200.

Preferably, a closure member 69II as described above is associated with each portion of the conduit 63 that brings the first material to a respective outlet 62.

The person skilled in the art will understand that the two closure members 69I, 69II described above provide the possibility of an additional adjustment of the operation of the machine 10, as an aid to the adjustment performed on the two feeding devices 20 and 40.

In one or more preferred embodiments, as the one illustrated, the machine 10 comprises a conveyor 90 provided with a transport plane 90A configured to support the continuous strand 110 of material and make it advance along the feeding direction K1, at the same speed at which the two material flows 102, 104 exit through the respective outlets 62 and 64.

The conveyor 90 can for example be a conveyor belt, as in the example illustrated in figures 1 and 2, or any other suitable transport means for the indicated purposes.

The cutting unit 80 is disposed along the transport plane 90A to be able to subdivide the continuous strand 110 of material into a plurality of filled products, as described above.

In one or more preferred embodiments, as the one illustrated, the knife 82 comprises a vertical blade, movable vertically in the plane in which the blade lies, according to an alternating linear movement, and provided with a lower cutting edge.

Preferably, the cutting unit 80 comprises an electrical or pneumatic actuator (not illustrated) for actuating the movement of the knife 82.

Preferably, the cutting unit 80 constitutes a module positionable in different positions along the feeding direction K1 according to the specific needs of the various applications.

For example, in applications where the second material is a soft cream, the machine 10 can comprise a cooling tunnel placed immediately downstream of the extrusion unit 60 and having the function of cooling the material strand 110 so as to increase the viscosity of the cream before cutting; in this case, the cutting unit is therefore placed at a greater distance from the extrusion unit, precisely to allow the cooling tunnel to be disposed between the extrusion unit 60 and the cutting unit 80.

The control unit 200 can be configured to control the handling cycle of the knife 82 as a function of the length of the filled products to be produced (measured along the feeding direction K1).

Preferably, the machine 10 comprises a thermal conditioning system configured to thermally condition the first and the second material inside at least one among the feeding device 20, the feeding device 40, and the extrusion unit 60.

Preferably, said thermal conditioning system comprises a thermal conditioning plate thermally coupled to the feeding device 21 to thermally condition the first material contained in the internal chamber 22.

Furthermore, said system comprises means capable, selectively, of heating and cooling said conditioning plate, in order to heat or cool the first material contained in the internal chamber 22.

Said means can, for example, comprise a heat pump thermal conditioning circuit, a Peltier cell or a refrigeration circuit and a heating resistor.

Preferably, the thermal conditioning system comprises a series of heating resistors to heat the material passing through the feeding device 40 and the extrusion unit 60.

Naturally, the principle of the invention remaining unchanged, the details of construction and the embodiments may vary, even significantly, with respect to what has been illustrated herein by way of non-limiting example only, without thereby departing from the scope of the invention, as defined by the appended claims.

## Claims

1. Machine (10) for producing a filled food product, comprising:
- a first feeding device (20) for feeding a first food material along a first feeding direction (K1);
- a second feeding device (40) for feeding a second food material along a second feeding direction (K2) transverse to said first feeding direction (K1);
- an extrusion unit (60) comprising at least a first outlet (62), placed in fluid communication with the first feeding device (20), and at least a second outlet (64), placed in fluid communication with the second feeding device (40), wherein the first outlet (62) and the second outlet (64) lie on a same plane (P) transverse to the first feeding direction (K1), and are mutually arranged so as to determine a continuous flow (102) of the first material and a continuous flow (104) of the second material, which advance along the first feeding direction (K1) and are such that the continuous flow (102) of the first material at least partially surrounds the continuous flow (104) of the second material so as to contain it;
- a cutting unit (80) comprising a knife (82) movable on a plane transverse to the first feeding direction (K1), for portioning the continuous flow (102) of the first material and the continuous flow (104) of the second material, into a plurality of filled products, each comprising an external housing constituted by the first material, and a filling constituted by the second material and contained in said external housing.

2. Machine according to claim 1, wherein said first feeding device (20) comprises an internal chamber (22), in which the first material is received, and at least one screw feeding tool (26), which is disposed inside said internal chamber (22) and is rotatable about a rotation axis (I) parallel to the first feeding direction (K1),
said internal chamber (22) and said screw feeding tool (26) being configured to advance the first material along said first feeding direction (K1) as a result of a rotation of said screw feeding tool (26) about said rotation axis (I).

3. Machine according to claim 1 or 2, wherein said second feeding device (40) comprises a volumetric pump (42) comprising at least one rotating pumping member and configured to feed the second material to the second outlet (64) at a given pressure.

4. Machine according to any one of the preceding claims, wherein said extrusion unit (60) comprises a conduit structure (61) configured to place said first feeding device (20) in fluid communication with said first outlet (62), and said second feeding device (40) in fluid communication with said second outlet (64).

5. Machine according to claim 4, wherein said conduit structure (61) comprises a first conduit (63), which places said first feeding device (20) in fluid communication with said first outlet (62), and which extends along said first feeding direction (K1), presenting a flow section decreasing in a direction towards said first outlet (62), and wherein said conduit structure (61) comprises a second conduit (65), which places said second feeding device (40) in fluid communication with said second outlet (64) and comprises a first section (65A), oriented along the second feeding direction (K2), through which it receives the second material fed by the second feeding device (40), and a second section (65B), oriented along the first feeding direction (K1) or along a direction (K2') parallel to the second feeding direction (K2), through which it feeds the second material to the second outlet (64).

6. Machine according to claim 4 or 5, wherein said extrusion unit (60) comprises a plate (67) fixed in a removable manner to said conduit structure (81) and comprising a shaped through opening (87A), within which both said first and second outlet (62, 64) are defined.

7. Machine according to any one of the preceding claims, wherein said first outlet (62) completely surrounds said second outlet (64) so that the continuous flow (102) of the first material completely surrounds the continuous flow (104) of the second material, around a reference axis parallel to the first feeding direction (K1) .

8. Machine according to any one of the preceding claims, wherein said first outlet (62) partially surrounds said second outlet (64) so that the continuous flow (102) of the first material defines a cavity open towards the outside, in a direction transverse to the first feeding direction (K1), within which the continuous flow (104) of the second material is housed, remaining exposed towards the outside.

9. Machine according to claim 3, when dependent on claim 2, comprising a control unit (200) configured to control said first feeding device (20) based on a reference value indicative of a rotation speed of said screw feeding tool (26), and configured to control said second feeding device (40) based on a reference value indicative of a rotation speed of said rotating pumping member.

10. Machine according to any one of the preceding claims, comprising a thermal conditioning system configured to condition the first and/or the second material inside at least one among the feeding device (20), the feeding device (40), and the extrusion unit (60).

11. Machine according to any one of the preceding claims, comprising a conveyor (90) provided with a transport plane (90A) arranged downstream of the extrusion unit (60), along the first feeding direction (K1), and configured to support the continuous flow (102) of the first material and the continuous flow (104) of the second material and make them advance along the first feeding direction (K1), preferably at the same speed at which the two material flows (102, 104) exit through the first outlet (62) and the second outlet (64), respectively.

12. Machine according to claim 5, comprising a first closure member (691), which is mounted on the extrusion unit (60) so as to be disposed inside the first conduit (63) and is adjustable in position so as to vary the flow section of the first conduit at the region occupied by the same first closure member, and a second closure member (69II), which is mounted on the extrusion unit (60) so as to be disposed inside the second conduit (65) and is adjustable in position so as to vary the flow section of the second conduit at the region occupied by the same second closure member.
